# EUROPÄISCHE PATENTSCHRIFT

(11) **EP 2 103 472 B1**
(45) Veröffentlichungstag und Bekanntmachung des Hinweises auf die Patenterteilung: **14.06.2017**
(21) Anmeldenummer: 09003820.9
(22) Anmeldetag: 17.03.2009
(51) Int. Cl.: B60K 8/00, F28F 9/00

(54) **Befestigungsvorrichtung, insbesondere für ein oder mehrere Gebläse**
Attachment device, in particular for one or more fan
Dispositif de fixation, notamment pour un ou plusieurs ventilateurs

(30) Priorität: 17.03.2008 DE 102008014471; 21.05.2008 DE 102008024613
(43) Veröffentlichungstag der Anmeldung: 23.09.2009
(73) Patentinhaber: MAHLE Behr GmbH & Co. KG, 70469 Stuttgart (DE)
(72) Erfinder: Andritter, Dirk, 71726 Benningen (DE)
(74) Vertreter: Grauel, Andreas

(56) Entgegenhaltungen:
- EP-A1- 0 733 809
- DE-U1- 9 114 734
- US-A- 5 498 130
- US-A- 5 626 202
- US-A- 5 628 206

## Beschreibung

Die Erfindung betrifft eine Befestigungsvorrichtung, insbesondere für ein oder mehrere Gebläse, insbesondere einer Kraftfahrzeug-Klimaanlage, gemäß dem Oberbegriff des Anspruchs 1. US 5 498 130 A offenbart eine derartige Befestigungsvorrichtung. Das oder die Gebläse werden herkömmlicher Weise an einem einstückig ausgebildeten, als Befestigungsvorrichtung dienenden Kunststoff-Zargen angebracht, der seinerseits an einem Kühler angebracht ist, wobei der Zargen etwa der Kühlerfläche entspricht und entsprechend der Anzahl der Gebläse kreisförmige Öffnungen aufweist. Der Kunststoff-Zargen wird mittels Spritzgießens hergestellt.

Eine derartige Befestigungsvorrichtung lässt noch Wünsche offen.

Es ist Aufgabe der Erfindung, eine verbesserte Befestigungsvorrichtung zur Verfügung zu stellen.

Diese Aufgabe wird gelöst durch eine Befestigungsvorrichtung mit den Merkmalen des Anspruchs 1. Vorteilhafte Ausgestaltungen sind Gegenstand der Unteransprüche.

Erfindungsgemäß ist eine Befestigungsvorrichtung vorgesehen, die mehrteilig ausgebildet ist. Die mehrteilige Ausgestaltung ermöglicht, dass im Reparaturfall nicht der gesamte Zargen ausgetauscht werden muss, sondern lediglich ein Teil, insbesondere ein Halter für die Gebläsemotoraufnahme, mit dem hieran befestigten Gebläse ausgebaut und ggf. ausgetauscht werden kann. Ferner ermöglicht der mehrteilige Aufbau ein Auswuchten des Gebläses kurz vor dem Einbau, so dass Beschädigungen beim Transport und der Lagerung der Teile vermieden und ein optimal ausgewuchtetes Gebläse eingebaut werden kann. Die mehrteilige Ausgestaltung umfasst bevorzugt einen Hauptteil und mindestens einen als Halter ausgebildeten Teil, wobei der Hauptteil in seinen Abmessungen deutlich größer als der andere Teil ausgebildet ist.

Dabei ist der mehrteilig ausgebildete Zargen mittels einer lösbaren Verbindung, vorzugsweise einer Schraubverbindung oder Bajonettverbindung, fest verbunden.

Die Unterteilung des Zargen ist bevorzugt im Bereich des Außenumfangs des Gebläses ausgebildet.

Der Halter weist vorzugsweise Streben, bevorzugt vier Streben, auf. Die Enden der Streben ragen über das Gebläse etwas hinaus und dienen der Befestigung des Gebläses am Hauptteil. Hierbei sind insbesondere Durchgangsbohrungen zum Durchstecken von Schrauben vorgesehen.

Bevorzugt weist der Halter einen Rand auf, welcher die Stabilität erhöht. Der Rand weist bevorzugt zwei konzentrisch zueinander angeordnete Bereiche auf. Dabei können diese Bereiche der flexiblen Anpassung unterschiedlicher Gebläse an einen für verschiedene Varianten gleichen Hauptteil dienen.

Vorzugsweise weist der Halter Versteifungsrippen zur Erhöhung der Steifigkeit und zur Verringerung des Gewichts auf.

Der Halter weist bevorzugt Rippen, insbesondere drei Rippen, auf, die in Längserstreckung der Streben des Halters in deren Endbereichen parallel zueinander angeordnet sind. Diese Rippen verhindern ein Abknicken und erhöhen die Belastbarkeit der Streben in Richtung der Rotationsachse des Lüfterrades.

Besonders bevorzugt sind die Teile des Zargen, d.h. der Hauptteil und der Halter, mittels Bajonettverbindungen miteinander verbunden. Hierbei sind bevorzugt mehrere, insbesondere drei oder vier Bajonette am Halter ausgebildet, wobei sie sich besonders bevorzugt in Verlängerung von sich in radialer Richtung erstreckenden Streben des Halters erstrecken.

Zur Sicherung der Position der Bajonette ist vorzugsweise an mindestens einem der Bajonette eine Öffnung zur Sicherung des verriegelten Zustands ausgebildet. In diese Öffnung kann beispielsweise eine Schraube eingesteckt sein, welche in einer weiterführenden Öffnung im anderen Bauteil eingeschraubt ist. Alternativ kann auch ein Stift eingepresst oder ein Draht zur Sicherung durchgeführt sein. Beliebige andere Sicherungen sind möglich.

Zur exakten Zentrierung des Halters in der Öffnung im Hauptteil sind bevorzugt am Halter mindestens drei, insbesondere bevorzugt genau vier, Zentriernocken ausgebildet, die sich in radialer Richtung erstrecken und vorzugsweise, aber nicht notwendigerweise, gleichmäßig über den Umfang verteilt sind.

Bevorzugt sind Halter und Hauptteil über eine relative Drehbewegung miteinander verbunden, insbesondere bevorzugt über Bajonettverbindungen, wobei mindestens ein sich in radialer Richtung erstreckender Anschlag an einem der Bauteile ausgebildet ist, welcher mit einer am anderen Bauteil ausgebildeten Zunge zusammenwirkt. Beim Zusammenbauen wird die Zunge temporär elastisch verformt, um es dem Anschlag zu ermöglichen, in seine Endposition zu gelangen. Danach geht die Zunge wieder in ihren Ausgangszustand und liegt somit am Anschlag an, um ein Zurückdrehen zu verhindern. Für ein Lösen kann die Zunge von Hand oder mit einem Werkzeug weggedrückt werden, so dass ein Zurückdrehen möglich ist. Am Anschlag können Vorsprünge vorgesehen sein, welche die Zunge in ihrer Sollposition halten, d.h. die Zunge kann bei einer größeren Belastung nicht zur Seite wegrutschen und den Weg für ein Zurückdrehen freigeben.

Die Teile des Zargen sind bevorzugt als Kunststoff-Spritzgussteile ausgebildet. Dabei kann zur Herstellung derselben ein gleichbleibendes Werkzeug zur Herstellung des Hauptteils und mehrere variantenabhängige Werkzeuge zur Herstellung der Halter verwendet werden, so dass die Werkzeugkosten bei mehreren Varianten verringert werden können.

Im Folgenden wird die Erfindung anhand zweier Ausführungsbeispiele unter Bezugnahme auf die Zeichnung im Einzelnen erläutert. Es zeigen:
- Fig. 1: eine Ansicht auf einen Zargen mit eingebauten Gebläsen gemäß dem ersten Ausführungsbeispiel von hinten,

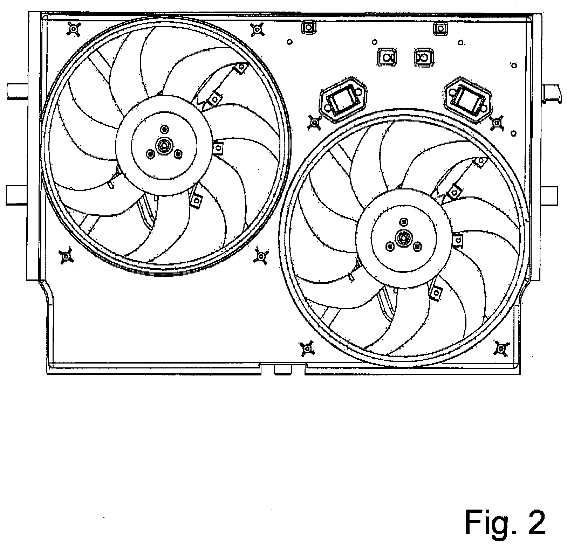

- Fig. 2: eine Ansicht des Zargen von Fig. 1 von vom,

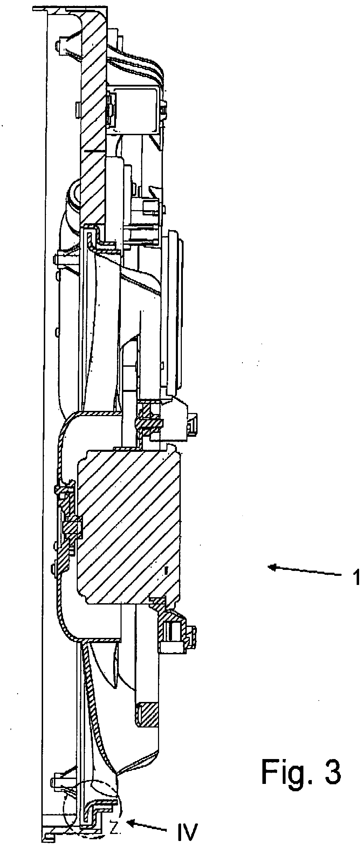

- Fig. 3: einen Schnitt durch den Zargen,
- Fig. 4: eine Detailansicht des Details IV von Fig. 3,

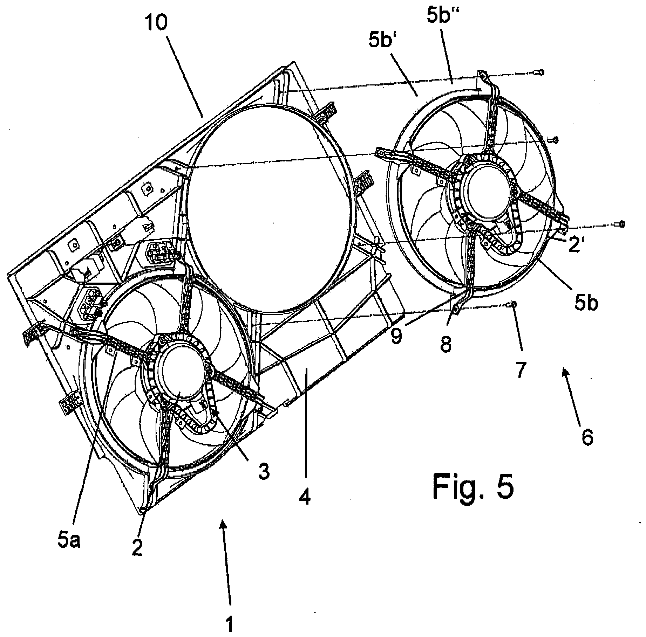

- Fig. 5: eine perspektivische Ansicht mit einem eingebauten und einem noch nicht eingebauten Gebläse,

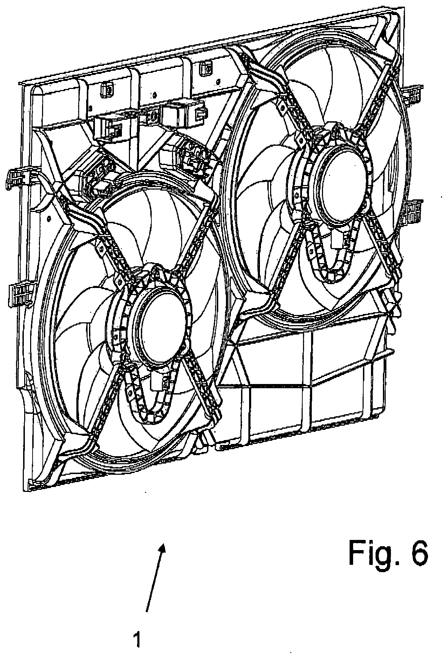

- Fig. 6: eine perspektivische Ansicht mit zwei eingebauten Gebläsen,
- Fig. 7: ein Gebläse gemäß dem zweiten Ausführungsbeispiel vor dem Einbau,
- Fig. 8: ausschnittsweise und von der anderen Seite gesehen, das Gebläse von Fig. 7 im in einen Zargen eingebauten Zustand,
- Fig. 9: eine Detaildarstellung des Details IX von Fig. 7,
- Fig. 10: eine Detaildarstellung des Details X von Fig. 7,
- Fig. 11: eine Detaildarstellung des Details XI von Fig. 7, und
- Fig. 12: eine Detaildarstellung des Details XII von Fig. 8.

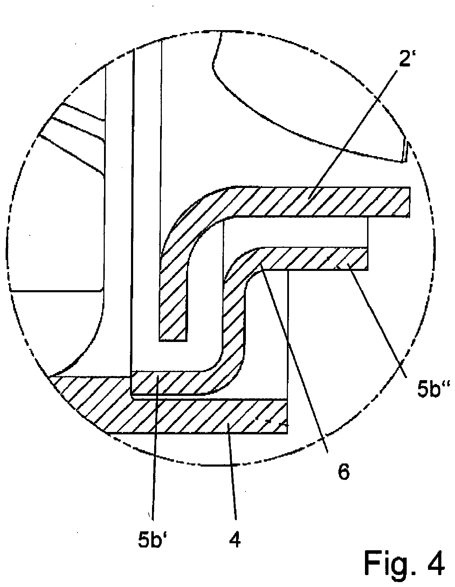

Eine Befestigungsvorrichtung 1 zur Befestigung zweier Gebläse 2 mit je einem Gebläsemotor 3 mittels eines mehrteiligen Zargen an einem Kühler (nicht dargestellt) eines Kraftfahrzeugs ist als mehrteiliges Kunststoff-Spritzgussteil ausgebildet. Hierbei sind ein Hauptteil 4 mit zwei im Wesentlichen kreisförmigen, dem Durchmesser der Lüfterräder entsprechenden Öffnungen und zwei mit je vier Streben 5a und einem umlaufenden Rand 5b ausgebildeten Halter 6 für die Gebläse 2 vorgesehen, wobei die Streben 5a in der Nähe derer äußerer Enden durch den kreisförmig, entsprechend der Öffnung ausgebildeten Rand 5b verbunden sind (siehe Fig. 4). Der Rand 5b ist derart ausgebildet, dass ein am Hauptteil 4 angeordneter Bereich 5b' einen größeren Durchmesser als ein gebläseseitig angeordneter, konzentrisch hierzu verlaufender Bereich 5b" aufweist. Das Gebläse 2 weist einen hieran angepasst ausgebildeten Rand 2' auf, wie insbesondere aus Fig. 4 zu entnehmen ist, wobei der Rand 2' sich zum Hauptteil 4 hin derart aufweitet. Das Einsetzen des Gebläses 2 im Halter 6 erfolgt aus der dem Einsetzen des Halters 6 in den Hauptteil 4 entgegengesetzten Richtung.

Die Halter 6 sind am Hauptteil 4 mittels Schrauben 7 lösbar befestigt, wobei je eine Schraube 7 durch eine am Ende jeder Strebe 5a vorgesehene Öffnung 8 gesteckt und in den Hauptteil 4 geschraubt ist. Das Gebläse 2 ist seinerseits mittels Schrauben am Halter 6 befestigt, wobei die Anbringung des Gebläses 2 am Halter 6 vor dem Anbringen des Halters 6 am Hauptteil 4 erfolgt.

Der Hauptteil 4 weist zur Erhöhung der Steifigkeit bei möglichst geringem Gewicht Versteifungsrippen auf. Ebenfalls sind die Halter 6 mit Versteifungsrippen versehen. An den Enden der Streben 5a des Halters 6 sind drei parallel zueinander verlaufende Rippen 9 vorgesehen, die um das Gebläse 2 bis über den Rand 5b hinaus bis zu den Öffnungen 8 ragen. Zur Positionierung des Halters 6 am Hauptteil 4 ist am Hauptteil 4 ein umlaufender Rand 10 ausgebildet, welcher die Öffnung für das entsprechende Gebläse 2 begrenzt, und die Streben 5a weisen einen Absatz auf, welcher in seinen Abmessungen an den Rand 10 angepasst ist. Im zusammengebauten Zustand liegt der Rand 10 direkt neben dem Bereich 5b' des Randes 5b.

Die beiden Gebläse 2 sind versetzt an der Befestigungsvorrichtung 1 angeordnet, so dass die Fläche des Kühlers möglichst gleichmäßig von Luft durchströmt werden kann.

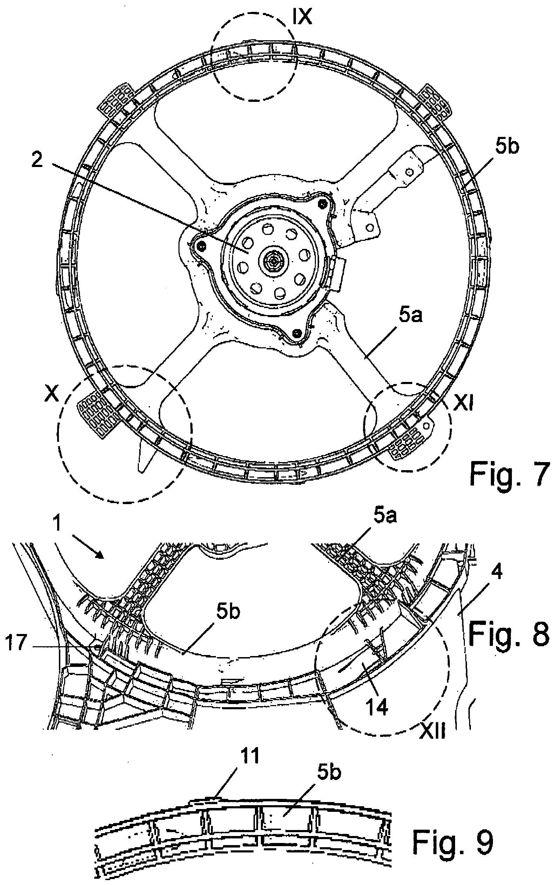

Im Folgenden wird unter Bezugnahme auf die Figuren 7 und 8 das zweite Ausführungsbeispiel näher beschrieben. Hierbei sind gleiche oder gleichwirkende Elemente mit den gleichen Bezugszeichen wie beim ersten Ausführungsbeispiel bezeichnet.

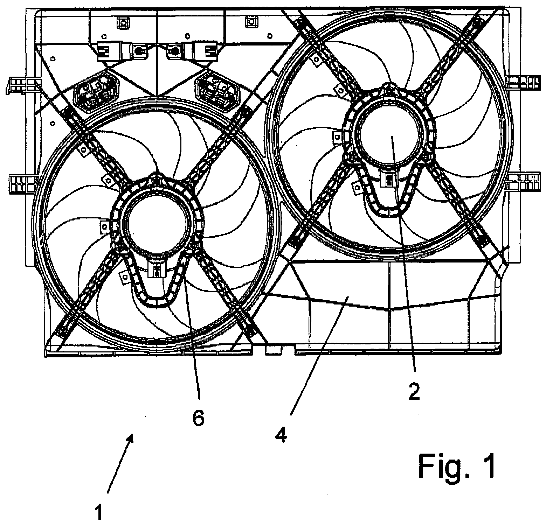

Obwohl in der Zeichnung nicht dargestellt, sind wiederum eine Befestigungsvorrichtung 1 zur Befestigung zweier Gebläse 2 mit je einem Gebläsemotor entsprechend der Anordnung von Fig. 1 vorgesehen. Der mehrteilige Zargen dient wiederum der Befestigung der Gebläse 2 an einem Kühler (nicht dargestellt) eines Kraftfahrzeugs und ist als mehrteiliges Kunststoff-Spritzgussteil ausgebildet.

Hierbei sind - entsprechend dem ersten Ausführungsbeispiel - ein Hauptteil 4 mit zwei im Wesentlichen kreisförmigen, dem Durchmesser der Lüfterräder entsprechenden Öffnungen und zwei mit je vier Streben 5a und einem umlaufenden Rand 5b ausgebildeten Halter 6 für die Gebläse 2 vorgesehen, wobei die Streben 5a in der Nähe derer äußerer Enden durch den kreisförmig, entsprechend der Öffnung ausgebildeten Rand 5b verbunden sind.

Im Unterschied zur Ausgestaltung des Randes 5b gemäß dem ersten Ausführungsbeispiel sind zusätzlich, gleichmäßig über den Rand verteilt, vier Zentriernocken 11 (siehe Fig. 9) vorgesehen, welche die Zentrierung des Halters 6 in der entsprechenden Öffnung im Hauptteil 4 beim Zusammenbau vereinfachen. Die Zentriernocken 11 sind vorliegend etwa mittig zwischen zwei Streben 5a angeordnet und ragen etwa um die Dicke der Versteifungsrippen radial nach außen über den Umfang des kreisförmigen Randes 5b hinaus.

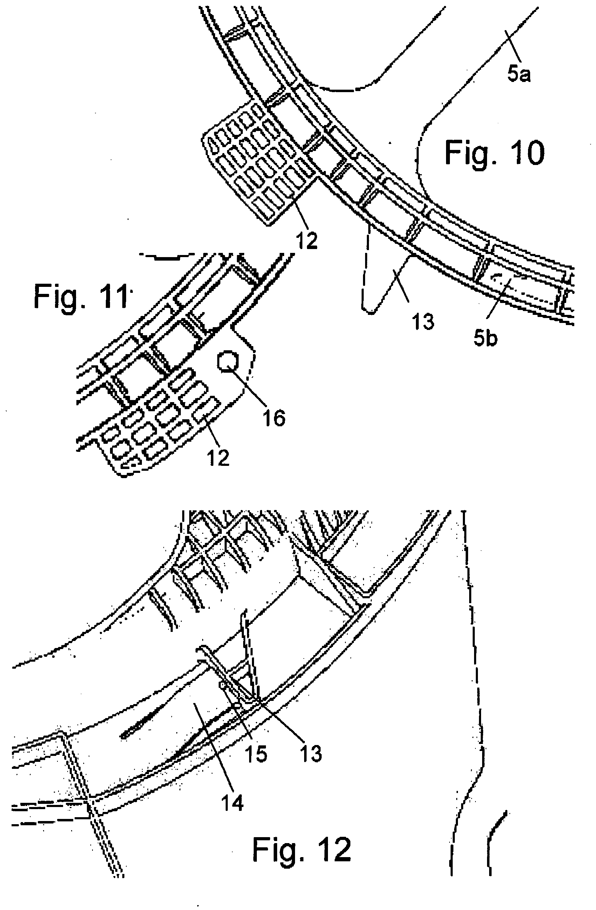

Ferner sind gemäß dem vorliegenden Ausführungsbeispiel wiederum gleichmäßig über den Umfang des Randes 5b verteilt, vier Bajonette 12 ausgebildet, die sich etwa in Verlängerung der Streben 5a radial nach außen erstrecken. Durch eine Drehbewegung des Halters 6 im Hauptteil 4 erfolgt über die in entsprechende Nuten eingeführten Bajonette 12 eine Verriegelung. Die Bajonettverbindung wird durch einen Anschlag 13 gesichert, welcher beim Drehen über eine am Hauptteil 4 ausgebildete Zunge 14 geführt wird, die sich bei Erreichen der Endposition in ihre Ausgangsstellung zurückbewegt und ein Rückdrehen blockiert (siehe Fig. 12). Zur Sicherung der Position der Zunge 14 ist vorliegend am Anschlag 13 ein als Anschlag dienender Vorsprung 15 ausgebildet. Alternativ oder in Verbindung hiermit kann ein als Anschlag dienender Vorsprung am Anschlag 13 ausgebildet sein.

Für eine zusätzliche (oder ggf. eine alternative) Sicherung ist vorliegend an einem der Bajonette 12 eine Öffnung 16 ausgebildet, durch welche eine Schraube (nicht dargestellt) eingesteckt und in eine weitere Öffnung 17 im Hauptteil 4 eingeschraubt werden kann.

Bei einer Demontage wird in einem ersten Schritt die Schraube entfernt. Anschließend wird die Zunge 14 zurückgedrückt, so dass die Bajonettverbindungen durch ein Zurückdrehen gelöst werden können und der Halter 6 vom Hauptteil 4 abgenommen werden kann.

Obwohl vorliegend die Verteilung der Bajonette 12 im Wesentlichen gleichmäßig über den Umfang des Halters 6 verteilt vorgesehen ist, kann natürlich auch eine ungleichmäßige Verteilung vorgesehen sein.

### Bezugszeichsnliste

1 Befestigungsvorrichtung
2 Gebläse
2' Rand
3 Gebläsemotor
4 Hauptteil
5a Strebe
5b Rand
5b', 5b" Bereich
6 Halter
7 Schraube
8 Öffnung
9 Rippe
10 Rand
11 Zentriernocken
12 Bajonett
13 Anschlag
14 Zunge
15 Vorsprung
16 Öffnung (Bajonett)
17 Öffnung (Hauptteil)

## Patentansprüche

1. Befestigungsvorrichtung zur Befestigung mindestens eines Gebläses (2) an einem Wärmetauscher, die einen Zargen aufweist, der am Wärmetauscher angebracht ist, und das Gebläse (2) am Zargen angebracht ist, wobei der Zargen mehrteilig mit einem Hauptteil (4) und mindestens einem Halter (6) ausgebildet ist, und der mehrteilig ausgebildete Zargen mittels einer lösbaren Verbindung fest verbunden ist, wobei die Unterteilung des Zargen im Bereich des Außenumfangs des Gebläses (2) ausgebildet ist, der Halter (6) Streben (5a) aufweist und der Halter (6) einen Rand (5b) aufweist, der Rand (5b) zwei konzentrisch zueinander angeordnete Bereiche (5b', 5b") aufweist und der Halter (6) Versteifungsrippen aufweist, sowie der Halter (6) Rippen (9) aufweist, die in Längserstreckung der Streben (5a) des Halters (6) in deren Endbereichen parallel zueinander angeordnet sind, **dadurch gekennzeichnet, dass** das Hauptteil (4) eine Öffnung aufweist, wobei das Hauptteil im Bereich der Öffnung einen in axialer Richtung verlaufenden Abschnitt aufweist und einen in radialer Richtung verlaufenden Abschnitt aufweist, wobei der radiale Abschnitt als axialer Anschlag für den Halter (6) dient und der Halter (6) in axialer Richtung von einer Seite des Hauptteils (4) aus in das Hauptteil (4) einsetzbar ist, wobei das Gebläse (2) von der entgegengesetzten Seite des Hauptteils (4) in axialer Richtung in den Halter (6) einsetzbar ist.

2. Befestigungsvorrichtung nach Anspruch 1, **dadurch gekennzeichnet, dass** die lösbare Verbindung eine Schraubverbindung oder Bajonettverbindung ist.

3. Befestigungsvorrichtung nach einem der vorhergehenden Ansprüche, **dadurch gekennzeichnet, dass** die Teile (4, 6) des Zargen als Kunststoff-Spritzgussteile ausgebildet sind.

4. Befestigungsvorrichtung nach einem der vorhergehenden Ansprüche, **dadurch gekennzeichnet, dass** die Teile (4, 6) des Zargen mittels Bajonettverbindungen miteinander verbunden sind.

5. Befestigungsvorrichtung nach Anspruch 4, **dadurch gekennzeichnet, dass** die Bajonette (12) am Halter (6) und in Verlängerung von sich in radialer Richtung erstreckenden Streben (5a) des Halters (6) ausgebildet sind.

6. Befestigungsvorrichtung nach Anspruch 4 oder 5, **dadurch gekennzeichnet, dass** an mindestens einem der Bajonette (12) eine Öffnung (16) zur Sicherung des verriegelten Zustands ausgebildet ist.

7. Befestigungsvorrichtung nach einem der vorhergehenden Ansprüche, **dadurch gekennzeichnet, dass** am Halter (6) mindestens drei, insbesondere genau vier, Zentriernocken (11) ausgebildet sind, die sich in radialer Richtung gleichmäßig über den Umfang verteilt, erstrecken.

8. Befestigungsvorrichtung nach einem der vorhergehenden Ansprüche, **dadurch gekennzeichnet, dass** Halter (6) und Hauptteil (4) über eine relative Drehbewegung miteinander verbunden sind, wobei mindestens ein sich in radialer Richtung erstreckender Anschlag (13) an einem der Bauteile ausgebildet ist, welcher mit einer am anderen Bauteil ausgebildeten Zunge (14) zusammenwirkt.

## Claims

1. A fastening device for fastening at least one fan (2) on a heat exchanger, having a frame which is attached to the heat exchanger, and wherein the fan (2) is attached to the frame, wherein the frame is formed from multiple parts, with a main part (4) and at least one holder (6), and wherein the frame formed from multiple parts is firmly connected by means of a separable connection, wherein the subdivision of the frame is formed in the region of the outer circumference of the fan (2), the holder (6) has struts (5a) and the holder (6) has an edge (5b), the edge (5b) has two regions (5b', 5b") which are arranged concentrically to one another and the holder (6) has stiffening ribs and the holder (6) has ribs (9) which are arranged parallel to one another in the longitudinal extension of the struts (5a) of the holder (6) in the end regions thereof, **characterised in that** the main part (4) has an opening, wherein the main part has, in the region of the opening, a section running in the axial direction and has a section running in the radial direction, wherein the radial section serves as an axial stop for the holder (6) and the holder (6) can be inserted into the main part (4) in the axial direction from a side of the main part (4), wherein the fan (2) can be inserted into the holder (6) in the axial direction from the opposite side of the main part (4).

2. The fastening device according to claim 1, **characterised in that** the separable connection is a screw connection or bayonet connection.

3. The fastening device according to one of the preceding claims, **characterised in that** the parts (4, 6) of the frame are formed as plastic injection-moulded parts.

4. The fastening device according to one of the preceding claims, **characterised in that** the parts (4, 6) of the frame are connected to one another by means of bayonet connections.

5. The fastening device according to claim 4, **characterised in that** the bayonets (12) are formed on the holder (6) and as an extension of struts (5a) of the holder (6) extending in the radial direction.

6. The fastening device according to claim 4 or 5, **characterised in that** an opening (16) for securing the locked state is formed on at least one of the bayonets (12).

7. The fastening device according to one of the preceding claims, **characterised in that** at least three, in particular exactly four centring cams (11) are formed on the holder (6) which extend in the radial direction and are evenly distributed around the circumference.

8. The fastening device according to one of the preceding claims, **characterised in that** the holder (6) and main part (4) are connected to one another via a relative rotational movement, wherein at least one stop (13) extending in the radial direction is formed on one of the components which cooperates with a tongue (14) formed on the other component.

## Revendications

1. Dispositif de fixation servant à la fixation au moins d'un ventilateur (2) sur un échangeur de chaleur, dispositif de fixation qui présente un châssis qui est fixé sur l'échangeur de chaleur, et le ventilateur (2) est fixé sur le châssis, où le châssis est configuré en plusieurs parties, en comprenant une pièce principale (4) et au moins un support (6), et le châssis configuré en plusieurs parties est assemblé de façon solidaire au moyen d'un assemblage détachable, où la subdivision du châssis est réalisée dans la zone de la circonférence extérieure du ventilateur (2), où le support (6) présente des entretoises (5a), et le support (6) présente une bordure (5b), la bordure (5b) présentant deux zones (5b', 5b") disposées de manière concentrique l'une par rapport à l'autre, et le support (6) présente des nervures de renfort, de même que le support (6) présente des nervures (9) qui, dans l'étendue longitudinale des entretoises (5a) du support (6), sont disposées, dans les zones d'extrémité desdites entretoises, en étant parallèles entre elles, **caractérisé en ce que** la pièce principale (4) présente une ouverture, où la pièce principale présente, dans la zone de l'ouverture, une partie s'étendant dans la direction axiale et une partie s'étendant dans la direction radiale, où la partie radiale sert de butée axiale pour le support (6), et le support (6) peut être introduit dans la pièce principale (4), à partir d'un côté de la pièce principale (4) suivant la direction axiale, où le ventilateur (2) peut être introduit dans le support (6), à partir du côté opposé de la pièce principale (4) suivant la direction axiale.

2. Dispositif de fixation selon la revendication 1, **caractérisé en ce que** l'assemblage détachable est un assemblage à vis ou un assemblage avec des éléments à baïonnette.

3. Dispositif de fixation selon l'une des revendications précédentes, **caractérisé en ce que** les pièces (4, 6) du châssis sont réalisées comme des pièces en matière plastique, moulées par injection.

4. Dispositif de fixation selon l'une quelconque des revendications précédentes, **caractérisé en ce que** les pièces (4, 6) du châssis sont assemblées l'une à l'autre au moyen d'assemblages avec des éléments à baïonnette.

5. Dispositif de fixation selon la revendication 4, **caractérisé en ce que** les éléments à baïonnette (12) sont configurés sur le support (6) et dans le prolongement d'entretoises (5a) du support (6), qui s'étendent dans la direction radiale.

6. Dispositif de fixation selon la revendication 4 ou 5, **caractérisé en ce qu'**une ouverture (16), servant à la sécurisation de l'état verrouillé, est réalisée sur au moins l'un des éléments à baïonnette (12).

7. Dispositif de fixation selon l'une quelconque des revendications précédentes, **caractérisé en ce qu'**au moins trois, en particulier précisément quatre cames de centrage (11) sont configurées sur le support (6), cames de centrage qui s'étendent en étant réparties de façon uniforme sur la circonférence, dans la direction radiale.

8. Dispositif de fixation selon l'une quelconque des revendications précédentes, **caractérisé en ce que** le support (6) et la pièce principale (4) sont assemblés l'un à l'autre par un mouvement relatif de rotation, où au moins une butée (13) s'étendant dans la direction radiale est configurée sur l'un des composants qui agit de façon conjointe avec une languette (14) configurée sur l'autre composant.
